# EUROPEAN PATENT SPECIFICATION

(11) **EP 4 074 638 B1**
(45) Date of publication and mention of the grant of the patent: **17.07.2024**
(21) Application number: 22162824.1
(22) Date of filing: 17.03.2022
(51) Int. Cl.: B65H 59/40, D03D 47/34, G01L 5/106, D03D 47/36, G01L 5/102

(54) **YARN TENSION SENSOR FOR TEXTILE MACHINES**
GARNSPANNUNGSSENSOR FÜR TEXTILMASCHINEN
CAPTEUR DE TENSION DE FIL POUR MACHINES TEXTILES

(30) Priority: 15.04.2021 IT 202100009470
(43) Date of publication of application: 19.10.2022
(73) Proprietor: L.G.L. Electronics S.p.A., 24024 Gandino (Bergamo) (IT)
(72) Inventor: BERTOCCHI, Giorgio, 24026 LEFFE BG (IT); PEDRINI, Giovanni, 24026 LEFFE BG (IT)
(74) Representative: Modiano, Micaela Nadia

(56) References cited:
- EP-A1- 0 790 208
- EP-A2- 0 852 217
- BE-A3- 1 003 243
- DE-A1- 4 041 142
- US-A- 4 058 008

## Description

The present invention relates to a yarn tension sensor for textile machines.

As is known, the tension of the yarn fed to a textile machine, such as a loom or a knitting machine, can be monitored by a yarn tension sensor and controlled, e.g., so that it remains substantially constant at an optimal preset value. Such contrivance makes it possible to improve the quality of the product and to minimize the risk of accidental jams or stoppages during the process.

In a way that is known per se, tension sensors can make use of various technologies. For example, sensors are known which are based on resistive strain gauges connected by a Wheatstone bridge, as well as sensors based on the Hall effect or on other principles of physics, e.g., inductive, capacitive or optical sensors.

Independently of the technology used, the tension sensor can comprise in general a detector device which is adapted to generate a signal that can vary as a function of the distance from a reference target which is fixed to a flexible element which carries a sliding element which is slideably engaged by the yarn.

As the tension of the yarn varies, the flexible element bends variably so as to vary the distance of the reference target from the detector element and consequently the signal generated by the detector.

Generally, it is known to position the detection assembly (detector and reference target) in a position spaced apart from the sliding path of the yarn, so as to make the detection assembly less prone to dust, oils, paraffins etc., which are generated by the slipping of the yarn on the sliding element.

To this end, the sliding element can consist of a straight rod that protrudes in a cantilever fashion from the flexible element and is engaged slideably by the yarn proximate to its free end.

A drawback of the sliding element implemented as above is that, following loosening, the yarn can pass beyond the end of the rod and end up irreversibly in the position opposite the position of correct engagement.

The above drawback can occur independently of the arrangement of the sensor, but it is even more probable if the sensor is arranged with the rod directed downward, since in this case the yarn tends naturally to disengage from the rod by gravity.

In light of this, normally the sensor is positioned with the rod arranged horizontally; nevertheless, this arrangement is often unwelcome for reasons of encumbrance.

US 4 058 008 A discloses a yarn tension sensor according to the preamble of claim 1.

The aim of the present invention is to provide a yarn tension sensor for weaving lines in which the sliding element cannot be disengaged from the yarn even in the event of loosening, independently of the arrangement of the sensor itself.

Within this aim an object of the invention is to provide a yarn tension sensor that is long-lasting and has high reliability, yet is relatively economical to make with respect to conventional tension sensors.

The above aim and this and other objects that will become clearer from the description that follows, are achieved by the yarn tension sensor having the characteristics recited in the appended claim 1, while the appended dependent claims define other characteristics of the invention which are advantageous, although secondary.

The yarn tension sensor according to the invention will be described in more detail, with reference to some preferred, but not exclusive, embodiments thereof, which are illustrated for the purposes of non-limiting example in the accompanying drawings, wherein:
Figure 1 is a perspective view of a storage yarn feeder provided with a yarn tension sensor according to the invention;
Figure 2 is a perspective view showing a detail of Figure 1 from a different angle;
Figure 3 is a side view of the yarn tension sensor of Figure 1;
Figure 4 is a partially cross-sectional view from below of the yarn tension sensor of Figure 1;
Figure 5 is a perspective view of a component of the yarn tension sensor in Figure 1;
Figure 6 is a partially cross-sectional side view of the component of Figure 5;
Figure 7 is a perspective view of a component of the yarn tension sensor of Figure 1 in a first variation of embodiment;
Figure 8 is a perspective view of a component of the yarn tension sensor of Figure 1 in a second variation of embodiment.

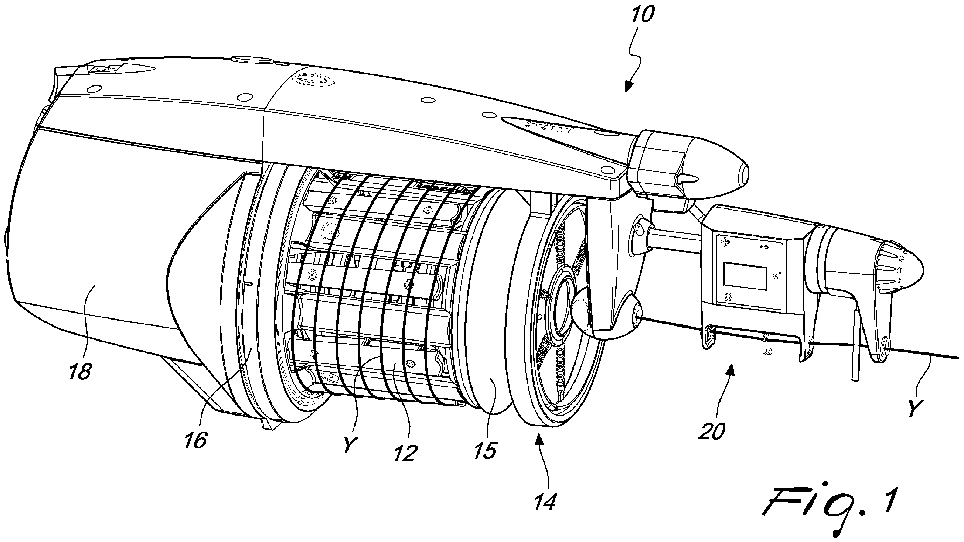

With initial reference to Figure 1, a yarn feeder 10 of the storage type comprises a drum 12 which is adapted to support wound thereon a plurality of loops of yarn Y forming a reserve. The yarn Y is adapted to be unwound from the drum 12 on demand by a generic textile machine downstream (not shown). In a way that is known per se, prior to being transferred to the textile machine, the yarn being unwound from the drum 12 passes through a weft braking device 14 which controls its mechanical tension. The weft braking device 14 can comprise, in a way that is conventional per se, a frustum-shaped body 15 that is pushed elastically against the delivery edge of the drum 12 so as to pinch the yarn in output and brake it by friction.

As the drum 12 is emptied, winding means that are per se known, which in this embodiment comprise a motorized flywheel 16, wind the new yarn taken from a spool upstream (not shown) on the drum 12. The flywheel 16 rotates coaxially with the drum 12, driven by a motor 18.

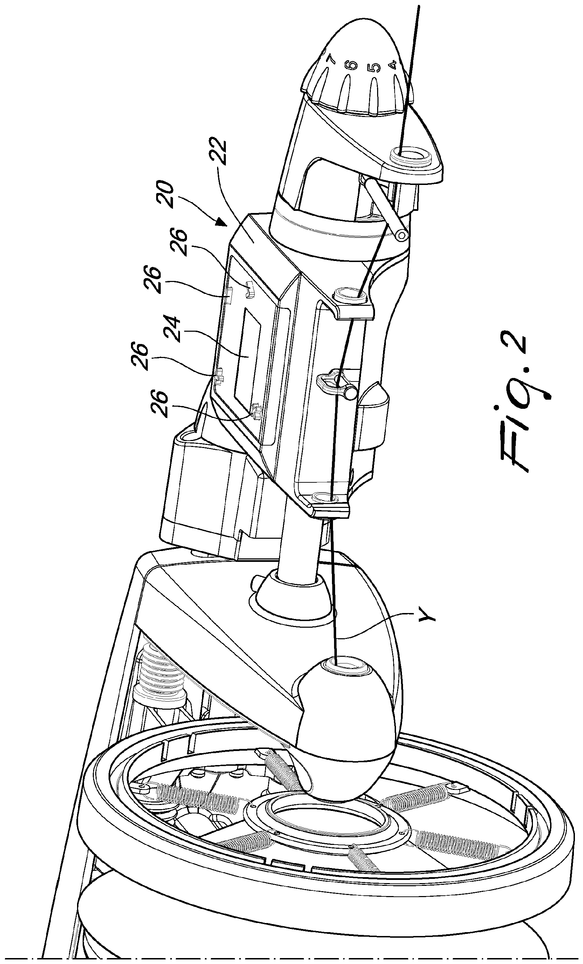

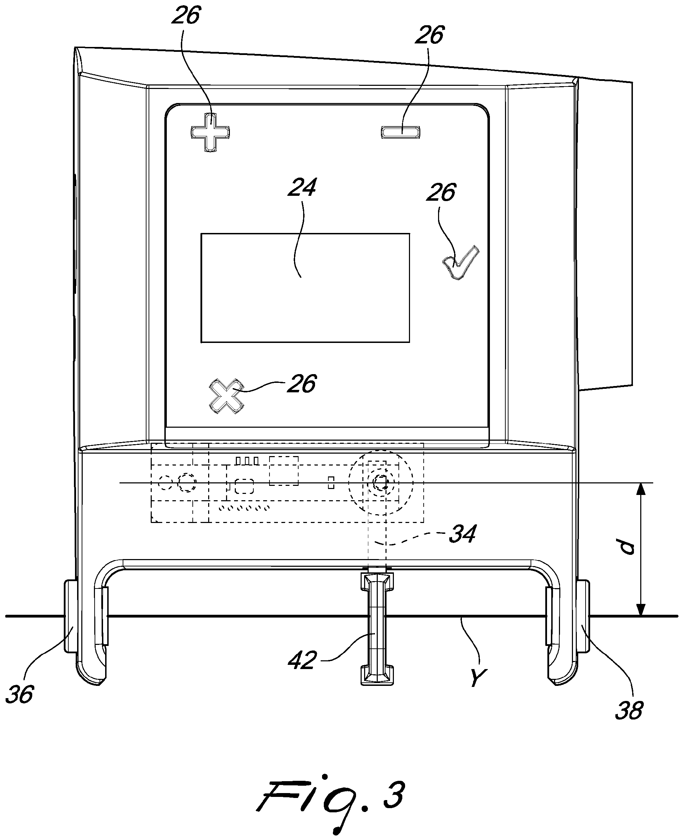

With reference now also to Figures 2-6, the yarn feeder 10 is provided with a tension sensor 20 which is adapted to measure the yarn tension in output from that feeder.

The tension sensor 20 comprises a support in the form of a shell 22, which is provided with a display 24 and setting buttons 26.

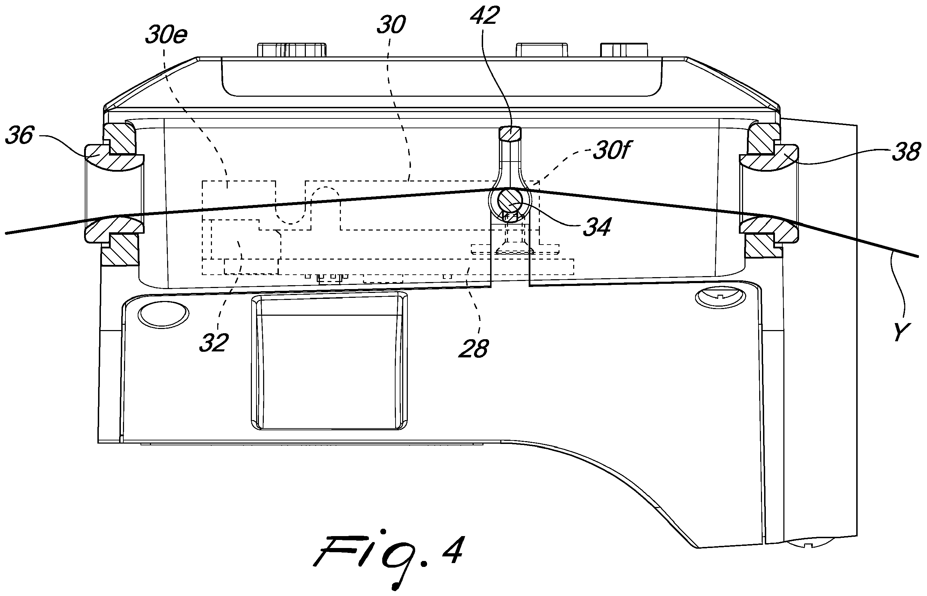

A circuit board 28 (Figure 4) is fixed inside the shell 22.

A flexible arm 30, which will be described in more detail below, extends in parallel to the circuit board 28. The flexible arm 30 has a first end, or fixed end 30e, which is fixed to the circuit board 28 by way of a spacer 32.

A contact rod 34 extends laterally from the opposite end, or moveable end 30f, of the flexible arm 30.

The contact rod 34 is adapted to be engaged, proximate to its free end, by the yarn Y being unwound from the drum 12 of the yarn feeder 10.

In particular, the contact rod 34 is arranged so as to interfere with the path imposed on the yarn Y by a pair of yarn-guiding bushes 36, 38 fixed to the shell 22 respectively upstream and downstream of the contact rod 34.

As a consequence, the moveable end 30f of the flexible arm 30 moves toward/away from the circuit board 28 in accordance with the tension variations of the yarn Y that engages the contact rod 34.

The moveable end 30f of the flexible arm 30 supports a reference element 40 which faces and is parallel to the circuit board 28 at a sensitive element of the sensor.

The contact rod 34 can be conventionally made of ceramic material in order to facilitate the sliding of the yarn Y with reduced friction.

In a manner known per se from EP 3 012 608 B1 of the same Applicant, in this embodiment the reference element 40 can consist of a pan made of conductive material which is supported in parallel to the circuit board 28, while the sensitive element can consist of a spiral coil (not shown) which is driven by a control unit of the circuit board in order to generate a magnetic field of constant strength which interacts with the reference element 40, so that the inductance and the resistance of the spiral coil vary as a function of the distance from the reference element 40, the control unit being programmed to calculate the tension of the yarn as a function of the variations in the inductance and in the resistance.

According to the invention, the contact rod 34 is provided with a retention element 42 at its free end, which is shaped so as to laterally retain the yarn at least on the side of the free end.

In the embodiment of Figures 1-5, the retention element 42 is shaped like a fork which is fitted over the free end of the contact rod 34 to define a closed passage 44 in which the yarn Y is inserted.

In this case, the retention element 42 can be advantageously made of plastic material and is press-fitted on the contact rod 34, with the optional addition of an adhesive.

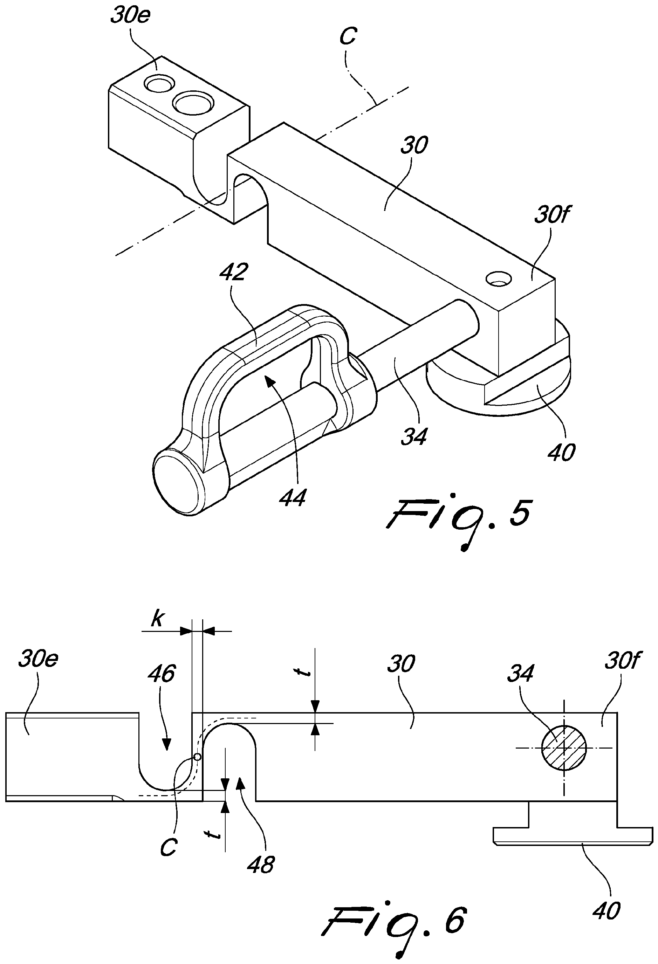

With particular reference to Figure 6, the flexible arm 30 consists of an elongated body preferably made of metallic material, e.g., an aluminum alloy, which has, proximately to the fixed end 30e, two recesses 46, 48 on respective opposite sides with respect to the flexing direction, these recesses being offset longitudinally so as to form a reduced-thickness area which is elastically flexible about an axis C.

The flexible arm is preferably rectangular or square in cross-section.

Advantageously, the recesses 46, 48 have identical and mutually opposite U-shaped profiles.

The recesses are deeper than half the distance between the sides in which they are provided. The minimum thickness t of material at the bottom of the recesses 46, 48 is advantageously equal to the minimum thickness k of material between the two recesses 46, 48 in a longitudinal direction.

In practice as well, it has been found that the invention fully achieves the set aims.

In fact, although the yarn slides in a position that is spaced apart from the detection assembly, it is effectively kept on the contact rod by the retention element, even in the event of loosening, and independently of the arrangement of the tension sensor.

For example, in the embodiment illustrated in the accompanying drawings the tension sensor is arranged with the contact rod directed downward in a substantially vertical direction, and the yarn, in the event of loosening, would tend to pass over the end of the contact rod by gravity. The retention element provided according to the invention, on the other hand, effectively retains the yarn, even with this arrangement of the tension sensor, which, as is well-known to the person skilled in the art, is particularly advantageous in terms of encumbrance.

The flexible arm provided as above has the advantage of offering a high torsional rigidity along its longitudinal axis, so as to prevent parasitic rotations along that axis.

Furthermore, this solution for the flexible arm makes it possible to distribute the mechanical effort uniformly in the zone of deformation, with relatively large minimum thicknesses, so as to minimize the maximum forces and as a consequence the risk of breakage owing to fatigue.

Furthermore, as the person skilled in the art will be able to appreciate, the flexible arm provided as above offers relatively low processing costs, with high repeatability of production.

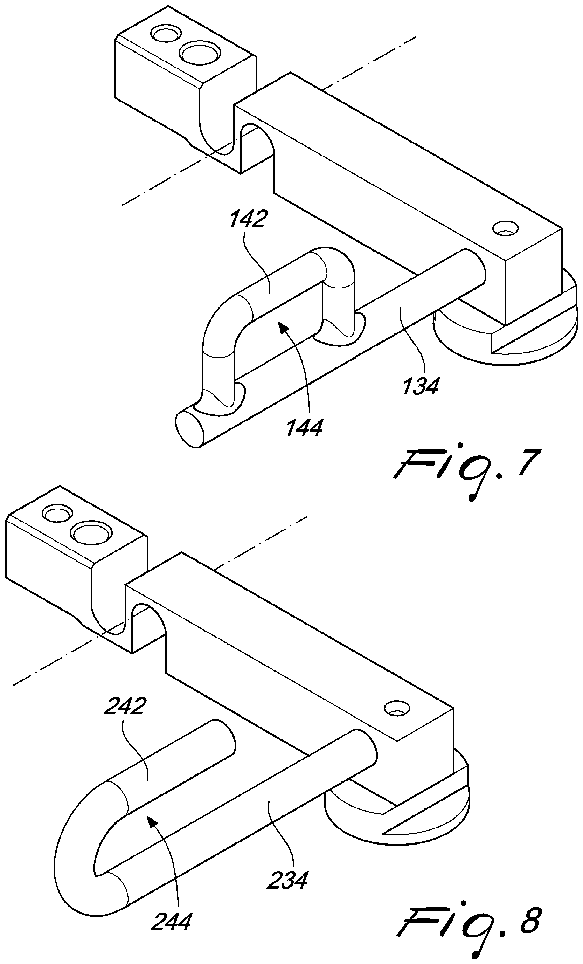

In an alternative embodiment illustrated in Figure 7, the retention element 142 consists of a bar shaped like an inverted letter U, which is made of the same material as the contact rod 134 and is joined monolithically, or welded, to the latter so as to define, in this case too, a closed passage 144.

In a further alternative embodiment illustrated in Figure 8, the retention element 242 consists of an extension of the contact rod 234 which is bent back inward in a U-shape to define, in this case, an open passage 244.

This embodiment, with respect to the previous embodiments, has the advantage of facilitating the threading of the yarn Y.

Some preferred embodiments of the invention have been described, but obviously the person skilled in the art may make various modifications and variations within the scope of protection of the claims.

In particular, the retention system described in association with the contact rod, as in the solution described for the flexible arm, can be applied to sensors based on different principles of physics, e.g., sensors based on resistive strain gauges connected by a Wheatstone bridge, sensors based on the Hall effect, and capacitive, optical, and other types of sensors.

Furthermore, many variations of the retention element can be devised by the person skilled in the art. For example, in an alternative solution, the contact rod could be folded so as to present an upturned U-shaped bend for receiving and laterally retaining the yarn.

Also, the flexible arm could have a larger number of recesses in order to increase the flexibility, e.g., three, four or more recesses.

Obviously, the sensor described could be associated with other types of yarn feeders, e.g., "positive" yarn feeders fitted with a rotating weftwinding spool, or used unaccompanied at an intermediate point of a yarn feeding line.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs

## Claims

1. A yarn tension sensor for weaving lines, which comprises:
- a support (22),
- a flexible arm (30) which has a fixed end (30e) which is integral with the support (22),
- a contact rod (34) which extends laterally from a moveable end (30f) of said flexible arm (30) and can be engaged slideably by a yarn (Y) proximate to a free end of the contact rod, said moveable end (30f) being adapted to move in relation to the tension variations of said yarn (Y),
- a detection assembly (28, 40) adapted to generate a signal that is variable in relation to the movement of said moveable end (30f),
said contact rod (34) being provided with a retention element (42) which is shaped so as to laterally retain the yarn (Y) at least on the side of the free end,
**characterized in that** said flexible arm (30) consists of an elongated body which has, proximate to said fixed end (30e), at least two recesses (46, 48) on respective opposite sides with respect to the flexing direction, said recesses being offset longitudinally so as to form a reduced-thickness area which is elastically flexible about an axis (C).

2. The yarn tension sensor according to claim 1, **characterized in that** said retention element (42) is shaped so as to form a closed passage (44) into which the yarn (Y) can be inserted.

3. The yarn tension sensor according to claim 2, **characterized in that** said retention element (42) is shaped like a fork fitted over the free end of the contact rod (34).

4. The yarn tension sensor according to claim 3, **characterized in that** said retention element (42) is made of plastic material and is press-fitted on the contact rod (34), with the optional addition of an adhesive.

5. The yarn tension sensor according to claim 2, **characterized in that** said retention element (142) consists of a bar which is substantially shaped like an inverted letter U, is made of the same material as the contact rod (134) and is joined monolithically, or welded, to the latter.

6. The yarn tension sensor according to claim 1, **characterized in that** said retention element (242) consists of an extension of the contact rod (234) which is bent back inward in a U-shape to define an open passage (244).

7. The yarn tension sensor according to one of claims 1-6, **characterized in that** said flexible arm (30) is rectangular or square in cross-section.

8. The yarn tension sensor according to one of claims 1-7, **characterized in that** said flexible arm (30) is made of an aluminum alloy.

9. The yarn tension sensor according to one of claims 1-8, **characterized in that** said recesses (46, 48) have identical and mutually opposite U-shaped profiles.

10. The yarn tension sensor according to claim 9, **characterized in that** said recesses (46, 48) are deeper than half the distance between the sides in which they are provided, and the minimum thickness (t) of material at the bottom of said recesses (46, 48) is equal to the minimum thickness (k) of material between said recesses (46, 48) in a longitudinal direction.

11. A yarn feeder, **characterized in that** it comprises a yarn tension sensor according to claim 1, which has said contact rod (34) directed downward in a substantially vertical direction.

## Patentansprüche

1. Ein Fadenspannungssensor für Weblinien, der Folgendes umfasst:
- eine Halterung (22),
- einen biegsamen Arm (30), der ein befestigtes Ende (30e) hat, welches integral mit der Halterung (22) ist,
- einen Kontaktstift (34), der sich seitlich von einem beweglichen Ende (30f) des biegsamen Arms (30) erstreckt und gleitend mit einem Faden (Y) nahe einem freien Ende des Kontaktstifts in Eingriff gebracht werden kann, wobei das bewegliche Ende (30f) ausgebildet ist, um sich in Bezug auf die Spannungsänderungen des Fadens (Y) zu bewegen,
- einen Erfassungsaufbau (28, 40), ausgebildet, um ein Signal zu erzeugen, das in Bezug auf die Bewegung des beweglichen Endes (30f) variabel ist,
wobei der Kontaktstift (34) mit einem Halteelement (42) ausgestattet ist, welches geformt ist, um den Faden (Y) mindestens an der Seite des freien Endes seitlich zu halten,
**dadurch gekennzeichnet, dass** der biegsame Arm (30) aus einem länglichen Körper besteht, der in der Nähe des befestigten Endes (30e) mindestens zwei Ausbuchtungen (46, 48) auf entsprechenden gegenüberliegenden Seiten mit Bezug auf die Biegerichtung hat, wobei die Ausbuchtungen in Längsrichtung versetzt sind, um einen Bereich mit verminderter Dicke zu bilden, der um eine Achse (C) elastisch biegsam ist.

2. Der Fadenspannungssensor gemäß Anspruch 1, **dadurch gekennzeichnet, dass** das Halteelement (42) geformt ist, um einen geschlossenen Durchgang (44) zu bilden, in welchen der Faden (Y) eingeführt werden kann.

3. Der Fadenspannungssensor gemäß Anspruch 2, **dadurch gekennzeichnet, dass** das Halteelement (42) wie eine Gabel geformt ist, die über das freie Ende des Kontaktstifts (34) aufgesetzt ist.

4. Der Fadenspannungssensor gemäß Anspruch 3, **dadurch gekennzeichnet, dass** das Halteelement (42) aus Kunststoffmaterial besteht und, mit optionaler Hinzugabe eines Klebstoffs, auf den Kontaktstift (34) pressgepasst wird.

5. Der Fadenspannungssensor gemäß Anspruch 2, **dadurch gekennzeichnet, dass** das Halteelement (142) aus einem Stab besteht, der im Wesentlichen wie ein umgekehrtes U geformt ist, aus demselben Material hergestellt ist wie der Kontaktstift (134) und monolithisch mit Letzterem verbunden oder verschweißt ist.

6. Der Fadenspannungssensor gemäß Anspruch 1, **dadurch gekennzeichnet, dass** das Halteelement (242) aus einer Verlängerung des Kontaktstifts (234) besteht, die in eine U-Form zurückgebogen ist, um einen offenen Durchlass (244) zu bestimmen.

7. Der Fadenspannungssensor gemäß einem der Ansprüche 1-6, **dadurch gekennzeichnet, dass** der biegsame Arm (30) einen rechteckigen oder quadratischen Querschnitt hat.

8. Der Fadenspannungssensor gemäß einem der Ansprüche 1-7, **dadurch gekennzeichnet, dass** der biegsame Arm (30) aus einer Aluminiumlegierung besteht.

9. Der Fadenspannungssensor gemäß einem der Ansprüche 1-8, **dadurch gekennzeichnet, dass** die Ausbuchtungen (46, 48) identische und einander entgegengesetzte U-förmige Profile haben.

10. Der Fadenspannungssensor gemäß Anspruch 9, **dadurch gekennzeichnet, dass** die Ausbuchtungen (46, 48) tiefer sind als der halbe Abstand zwischen den Seiten, in denen sie angebracht sind, und die minimale Dicke (t) des Materials am Boden der Ausbuchtungen (46, 48) gleich der minimalen Dicke (k) des Materials zwischen den Ausbuchtungen (46, 48) in einer Längsrichtung ist.

11. Eine Fadenzuführvorrichtung, **dadurch gekennzeichnet, dass** sie einen Fadenspannungssensor gemäß Anspruch 1 umfasst, bei dem der Kontaktstift (34) in einer im Wesentlichen vertikalen Richtung nach unten gerichtet ist.

## Revendications

1. Capteur de tension de fil pour lignes de tissage, comprenant :
- un support (22),
- un bras flexible (30) qui a une extrémité fixe (30e) qui est intégrée au support (22),
- une tige de contact (34) qui s'étend latéralement depuis une extrémité mobile (30f) dudit bras flexible (30) et qui peut entrer en contact glissant avec un fil (Y) à proximité d'une extrémité libre de la tige de contact, ladite extrémité mobile (30f) étant adaptée pour se déplacer relativement aux variations de tension dudit fil (Y),
- un ensemble de détection (28, 40) adapté pour produire un signal qui est variable relativement au déplacement de ladite extrémité mobile (30f),
ladite tige de contact (34) étant pourvue d'un élément de retenue (42) dont la forme est prévue pour retenir latéralement le fil (Y) au moins du côté de l'extrémité libre,
**caractérisé en ce que** ledit bras flexible (30) consiste en un corps allongé qui comporte, à proximité de ladite extrémité fixe (30e), au moins deux évidements (46, 48) sur des côtés opposés respectifs par rapport à la direction de flexion, lesdits évidements étant décalés longitudinalement afin de former une région d'épaisseur réduite qui est flexible de manière élastique autour d'un axe (C).

2. Capteur de tension de fil selon la revendication 1, **caractérisé en ce que** la forme dudit élément de retenue (42) forme un passage fermé (44) dans lequel le fil (Y) peut être inséré.

3. Capteur de tension de fil selon la revendication 2, **caractérisé en ce que** la forme dudit élément de retenue (42) forme une fourche montée sur l'extrémité libre de la tige de contact (34).

4. Capteur de tension de fil selon la revendication 3, **caractérisé en ce que** ledit élément de retenue (42) est fait de matière plastique et est emmanché à force sur la tige de contact (34), avec l'ajout optionnel d'un adhésif.

5. Capteur de tension de fil selon la revendication 2, **caractérisé en ce que** ledit élément de retenue (142) consiste en une barre qui présente substantiellement la forme d'une lettre U inversée, est fait du même matériau que la tige de contact (134) et est relié de façon monolithique, ou est soudé, à cette dernière.

6. Capteur de tension de fil selon la revendication 1, **caractérisé en ce que** ledit élément de retenue (242) consiste en un prolongement de la tige de contact (234) qui est replié vers l'intérieur en forme de U afin de définir un passage ouvert (244).

7. Capteur de tension de fil selon l'une des revendications 1 à 6, **caractérisé en ce que** ledit bras flexible (30) est de section rectangulaire ou carrée.

8. Capteur de tension de fil selon l'une des revendications 1 à 7, **caractérisé en ce que** ledit bras flexible (30) est fait d'un alliage d'aluminium.

9. Capteur de tension de fil selon l'une des revendications 1 à 8, **caractérisé en ce que** lesdits évidements (46, 48) ont des profils en U identiques et mutuellement opposés.

10. Capteur de tension de fil selon la revendication 9, **caractérisé en ce que** lesdits évidements (46, 48) sont plus profonds que la moitié de la distance qui sépare les côtés dans lesquels ils sont formés, et l'épaisseur minimum (t) de matériau au fond desdits évidements (46, 48) est égale à l'épaisseur minimum (k) de matériau entre lesdits évidements (46, 48) dans une direction longitudinale.

11. Dispositif d'alimentation en fil, **caractérisé en ce qu'**il comprend un capteur de tension de fil selon la revendication 1, dont ladite tige de contact (34) est orientée vers le bas dans une direction substantiellement verticale.
